# FASCICULE DE BREVET EUROPEEN

(11) **EP 0 581 681 B1**
(45) Date de publication et mention de la délivrance du brevet: **09.10.1996**
(21) Numéro de dépôt: 93401970.4
(22) Date de dépôt: 29.07.1993
(51) Int. Cl.: F16J 15/34

(54) **Garniture sèche à portance aérodynamique pour étanchéité de milieux gazeux**
Gastrockendichtung mit aerodynamischem Auftrieb
Dry gas face seal with aerodynamic thrust

(30) Priorité: 31.07.1992 FR 9209542
(43) Date de publication de la demande: 02.02.1994
(73) Titulaire: COMPAGNIE GENERALE D'AUTOMATISME CGA-HBS, F-91220 Brétigny sur Orge (FR)
(72) Inventeur: Aubert, Jean-François c/o Co. Gén. d'Aut. CGA-HBS, F-26500 Bourg les VALENCE (FR); Fraisse, Joel, F-26400 Crest (FR); Rocher, Aimé, F-26000 Valence (FR)
(74) Mandataire: Fournier, Michel

(56) Documents cités:
- FR-A- 2 299 552
- GB-A- 887 695
- HEINZ KONRAD MÜLLER 'Abdichtung bewegter Machineteile' 1990 , URSULA MüLLER , WAIBLINGEN * page 236 - page 241 *

## Description

La présente invention se rapporte à une garniture sèche à portance aérodynamique pour étanchéité de milieux gazeux selon le préambule de revendication 1 et connue du document HEINZKONRAD MÜLLER: "Abdichtung bewegter Maschinenteile", 1990, Ursula Müller, Waiblingen, page 236 - page 241.

Elle concerne plus précisément une garniture comportant une bague d'étanchéité primaire fixe et une bague d'étanchéité complémentaire avec des faces opposées s'étendant radialement dites frottantes, l'une desdites bagues étant conçue pour être fixée de façon étanche à un bâti et l'autre étant conçue pour être fixée à un arbre, et des rainures dites d'alimentation s'étendant vers l'intérieur à partir de l'une des circonférences de la face frottante de l'une desdites bagues.

Une telle garniture mécanique permet d'étancher la traversée d'une paroi d'enceinte par un arbre en rotation contre le passage d'un fluide gazeux par l'établissement d'un film de gaz au niveau de l'interface de la garniture et d'un débit de fuite contrôlé. Une bague est rendue solidaire de l'arbre tournant et présente une face frottante qui vient en vis à vis d'une deuxième face frottante fixe, d'une deuxième bague solidaire du bâti fixe. Les deux bagues sont plaquées l'une contre l'autre par un effort mécanique réalisé par un ou plusieurs ressorts ou par un soufflet élastique. La chambre délimitée par les deux bagues et le bâti fixe est alimentée par le gaz à étancher. La pression qui règne dans cette chambre est supérieure à celle qui règne dans la chambre délimitée par les deux bagues et l'arbre.

Les garnitures sèches à portance aérodynamique ont constitué un progrès non négligeable dans le domaine des garnitures car elles présentent de nombreux avantages face aux garnitures mécaniques frottantes généralement lubrifiées. En effet, celles-ci, du fait de leur frottement généraient des élévations de température et une usure inévitable. Elles nécessitaient, de plus, des systèmes annexes de lubrification et/ou de refroidissement.

Le principe de fonctionnement de la garniture à portance aérodynamique est basé sur l'équilibre entre les forces aérostatiques présentes en continu, agissant sur les pièces soumises aux efforts mécaniques et à la pression, et les forces aérodynamiques générées dans l'interface de la garniture, entre les deux faces frottantes lors de la rotation d'une bague par rapport à l'autre.

Des reliefs discontinus sont réalisés sur au moins une des faces annulaires d'étanchéité constitutives de l'interface, de telle sorte qu'au moyen d'un mouvement relatif des deux bagues, le milieu fluide s'introduise entre les faces constitutives de l'interface frottante et forme un film de gaz porteur supprimant ainsi totalement le contact entre la bague fixe et la bague tournante.

Depuis le début du développement de ces garnitures mécaniques à portance aérodynamique, les concepteurs de garnitures ont développé différents types de discontinuités pour générer ce film porteur.

Un premier type d'encoches comporte des rainures à profil de spirale logarithmique.

Des gorges en spirale s'étendent vers l'intérieur à partir d'une des circonférences de la face frottante de la bague, ces gorges s'arrêtant selon un diamètre délimitant une zone à gorges et une zone sans gorges dite piste continue.

Le gaz est pompé dans les gorges puis conduit jusque dans une zone circulaire contenant les extrémités des gorges, du fait de sa viscosité, de la rotation et du profil en spirale, puis il est comprimé en bout des gorges par restriction du flux de gaz, ceci créant une surpression. Le gaz est ensuite évacué, sous forme de film porteur le long de la piste continue dans la chambre délimitée par les deux bagues et l'arbre.

La pression qui règne dans ladite zone appelée zone de haute pression est supérieure à la pression extérieure. Cette zone est continue circonférenciellement mais limitée en largeur radiale.

Un deuxième type d'encoches comporte des rainures formant des profils dits patins de Rayleigh.

Les profils comportent des rainures radiales s'étendant vers l'intérieur à partir d'une des circonférences de la face frottante de la bague, ces rainures s'arrêtant selon un diamètre délimitant une zone à gorges et une zone sans gorges dite piste continue. A l'extrémité de chaque rainure radiale est reliée une rainure circonférencielle de profondeur inférieure.

Le gaz est tout d'abord pompé dans les rainures radiales qui servent d'alimentation aux rainures circonférencielles. Du fait de la viscosité du gaz et de la rotation, le gaz est ensuite entraîné vers des zones situées à l'extrémité de chaque rainure circonférencielle où il est comprimé du fait de la discontinuité de profondeur qui crée une surpression par effet de saut. Le gaz est ensuite évacué, sous forme de film porteur le long de la piste continue dans la chambre délimitée par les deux bagues et l'arbre.

Ces zones de haute pression sont très larges radialement mais discontinues circonférenciellement.

La présente invention propose un agencement de rainures génératrices de forces aérodynamiques au niveau de l'interface de garnitures mécaniques à portance aérodynamique, ces forces interfaciales générant une zone de pression élevée très homogène, large radialement et continue circonférenciellement contrairement aux cas des profils précédents.

Pour ce faire, conformément à l'invention, au moins deux rainures principales, de profondeur différente, conjointes, distantes de ladite circonférence et à profil convergent sont reliées à chacune desdites rainures d'alimentation, l'ensemble des rainures s'étendant jusqu'à un diamètre de la bague délimitant une zone à rainures et une zone sans rainures.

La succession de plusieurs rainures génère davantage de surpressions progressivement échelonnées par le passage de discontinuités successives.

Par ailleurs la découpe d'une rainure d'alimentation et de plusieurs rainures principales de profondeur différente permet de positionner précisément la zone de pression maximum au niveau de l'interface de la garniture, en fonction des paramètres de fonctionnement et de répartir cette zone de haute pression sur une portion de piste plus large radialement.

Ceci a pour effet d'augmenter la force aérodynamique générée par l'interface, donc de supporter une charge axiale plus élevée, d'avoir un film de gaz à pression plus homogène radialement et donc à encaisser des mésalignements des deux bagues plus importants.

Ainsi, en optimisant les profondeurs des rainures principales, on peut positionner la zone de pression maximum, de telle sorte que l'équilibre entre les forces aérostatiques et aérodynamiques conduise à un profil des faces parallèles pour chaque condition de fonctionnement donné.

Ces discontinuités de hauteur par effet de sauts successifs permettent d'obtenir une zone de pression très large radialement et les profils de chaque rainure principale étant convergents, on comprime le gaz par restriction du flux s'écoulant dans chaque rainure.

Selon une première variante de réalisation des rainures d'alimentation, elles sont radiales.

Selon une seconde variante de réalisation des rainures d'alimentation, elles sont circonférencielles.

Selon une première variante de réalisation des rainures principales, elles sont radiales.

Selon une seconde variante de réalisation des rainures principales, elles sont circonférencielles.

Ces différentes configurations permettent de minimiser le débit de gaz qui passe d'une chambre à l'autre en fonction des pressions à étancher et de la vitesse relative entre la bague fixe et la bague tournante.

Selon un mode de réalisation préféré, les rainures principales sont au nombre de trois pour chaque rainure d'alimentation.

Afin de réaliser un effet de saut, les rainures principales sont de profondeur inférieure à celle de la rainure d'alimentation correspondante.

Selon la première variante de réalisation des rainures principales, elles ont les unes par rapport aux autres une profondeur décroissante en s'éloignant de ladite circonférence de la bague.

Selon la seconde variante de réalisation des rainures principales, elles ont les unes par rapport aux autres une profondeur décroissante en s'éloignant de la rainure d'alimentation correspondante.

La surpression de gaz qui permet de générer un film porteur dans la zone sans rainures étant obtenue par une discontinuité de hauteur dans l'écoulement du gaz, plusieurs discontinuités sont réalisées qui permettent, au passage de chacune d'elles, l'augmentation du champ de pression et de la force aérodynamique ainsi créée.

L'invention est exposée ci-après plus en détail à l'aide de dessins ne représentant qu'un mode de réalisation préféré.

La figure 1 est une vue en coupe longitudinale d'une garniture aérodynamique conforme à l'invention.

Les figures 2 à 5 sont des vues partielles de face de la bague, selon des variantes de réalisation conformes à l'invention.

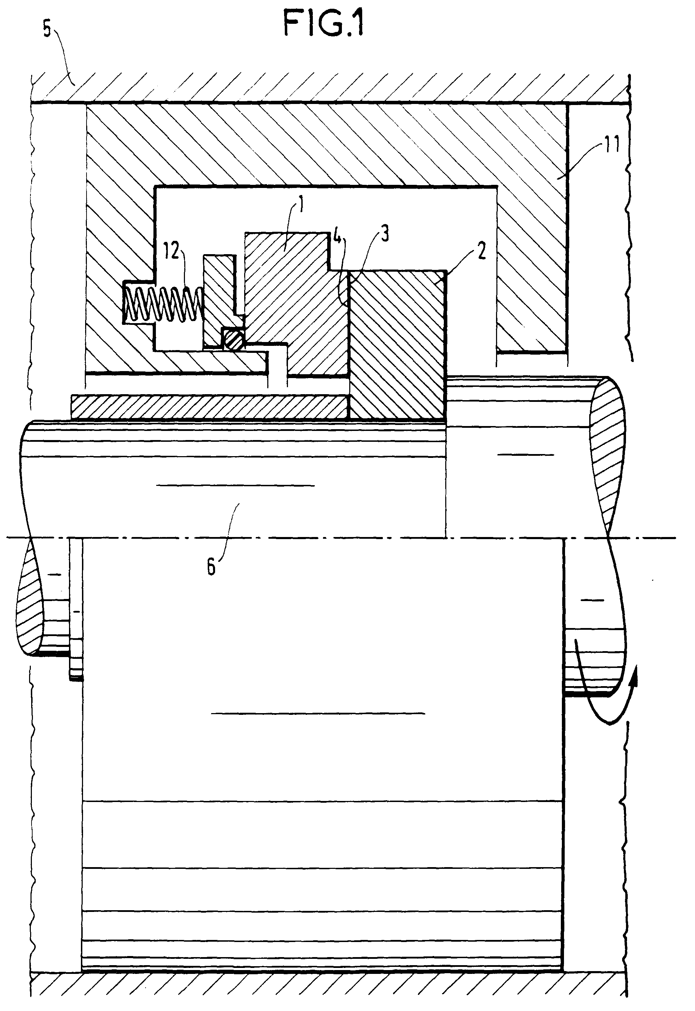

La figure 1 représente une garniture pour gaz comportant une bague d'étanchéité primaire 1 fixe et une bague d'étanchéité 2 complémentaire avec des faces 3,4 opposées s'étendant radialement dites frottantes; l'une desdites bagues 1 est conçue pour être fixée de façon étanche à un bâti 5 par l'intermédiaire de la pièce 11 et l'autre 2 est conçue pour être fixée à un arbre 6. La bague 1 est sollicitée en pression contre la bague 2 par un agencement de ressort 12.

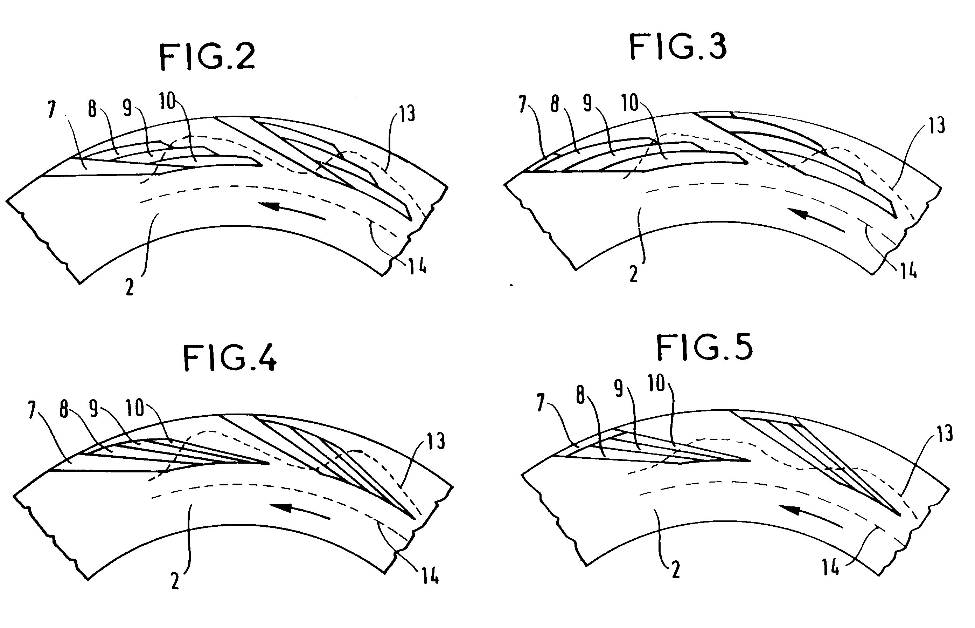

Comme représenté sur les figures 2 à 5, des rainures 7 dites d'alimentation s'étendent vers l'intérieur à partir de l'une des circonférences de la face 4 frottante de l'une desdites bagues 2 et au moins deux rainures 8,9,10 principales, de profondeur différente, conjointes, distantes de ladite circonférence et à profil convergent (c'est à dire que leurs bords vont en se rapprochant) sont reliées à chacune desdites rainures d'alimentation 7, l'ensemble des rainures 7,8,9,10 s'étendant jusqu'à un diamètre de la bague 2 délimitant une zone à rainures et une zone sans rainures dite piste continue. Une flèche représente le sens de rotation de la bague.

De préférence, les rainures principales 8,9,10 sont au nombre de trois pour chaque rainure d'alimentation 7.

De façon générale, l'ensemble des rainures 7,8,9,10 a une forme d'aile dirigée de façon opposée au sens de rotation.

Selon la figure 2, les rainures d'alimentation 7 sont radiales et les rainures principales 8,9,10 sont circonférencielles.

La rainure d'alimentation 7 est inclinée dans le sens opposé au sens de rotation de la bague. Les rainures principales 8,9,10 sont disposées d'un côté de la rainure d'alimentation 7, les unes au-dessous des autres, chacune débouchant dans la rainure d'alimentation et étant conjointe à une autre rainure principale. Leur longueur est telle que, compte tenu de l'inclinaison de la rainure d'alimentation, leurs extrémités opposées à celles débouchant dans la rainure d'alimentation 7 sont décalées dans le même sens que la rainure d'alimentation 7.

Selon la figure 3, les rainures d'alimentation 7 sont circonférencielles, ainsi que les rainures principales 8,9,10.

La rainure d'alimentation 7 est un tronçon s'étendant le long de la circonférence de la bague. Les rainures principales 8,9,10 plus longues sont disposées les unes au-dessous des autres sous cette rainure d'alimentation 7 de façon décalée, de telle sorte que leurs extrémités soient disposées sensiblement selon des lignes radiales, afin de former une forme générale de l'ensemble des rainures 7,8,9,10 identique à celle représentée sur la figure 2.

Selon la figure 4, les rainures d'alimentation 7 sont radiales, ainsi que les rainures principales 8,9,10.

La rainure d'alimentation 7 est inclinée dans le sens opposé au sens de rotation de la bague. Les rainures principales 8,9,10 sont disposées les unes à côté des autres d'un côté de la rainure d'alimentation, pour former une forme générale d'aile analogue aux précédentes.

Selon la figure 5, les rainures d'alimentation 7 sont circonférencielles et les rainures principales 8,9,10 sont radiales.

La rainure d'alimentation 7 est un tronçon s'étendant le long de la circonférence de la bague. Les rainures principales 8,9,10 sont disposées sous cette rainure d'alimentation 7, les unes à côté des autres, inclinées dans le sens opposé au sens de rotation de la bague.

Les rainures principales 8,9,10 sont de profondeur inférieure à celle de la rainure d'alimentation 7 correspondante.

Dans le cas des figures 2 et 3, les rainures principales 8,9,10 ont les unes par rapport aux autres une profondeur décroissante en s'éloignant de ladite circonférence de la bague.

Selon les figures 4 et 5, les rainures principales 8,9,10 ont les unes par rapport aux autres une profondeur décroissante dans le sens opposé au sens de rotation de la bague.

Entre les lignes en pointillés 13 et 14, se situe la zone de haute pression obtenue. Comme déjà explicité plus haut, cette zone de haute pression est large radialement et continue circonférenciellement.

## Revendications

1. Garniture sèche à portance aérodynamique pour étanchéité de milieux gazeux, comportant une bague d'étanchéité primaire (1) fixe et une bague d'étanchéité (2) complémentaire avec des faces (3,4) opposées s'étendant radialement dites frottantes, l'une desdites bagues (1) étant conçue pour être fixée de façon étanche à un bâti (5) et l'autre (2) étant conçue pour être fixée à un arbre (6), et des rainures (7) dites d'alimentation s'étendant vers l'intérieur à partir de l'une des circonférences de la face (4) frottante de l'une desdites bagues (2), garniture caractérisée en ce qu'au moins deux rainures (8,9) principales, de profondeur différente, conjointes, distantes de ladite circonférence et à profil convergent sont reliées à chacune desdites rainures d'alimentation (7), l'ensemble des rainures (7,8,9) s'étendant jusqu'à un diamètre de la bague (2) délimitant une zone à rainures et une zone sans rainures.

2. Garniture selon la revendication 1, caractérisée en ce que les rainures d'alimentation (7) sont radiales.

3. Garniture selon la revendication 1, caractérisée en ce que les rainures d'alimentation (7) sont circonférencielles.

4. Garniture selon la revendication 2 ou 3, caractérisée en ce que les rainures principales (8,9,10) sont radiales.

5. Garniture selon la revendication 2 ou 3, caractérisée en ce que les rainures principales (8,9,10) sont circonférencielles.

6. Garniture selon l'une des revendications précédentes, caractérisée en ce que les rainures principales (8,9,10) sont au nombre de trois pour chaque rainure d'alimentation (7).

7. Garniture selon l'une des revendications précédentes, caractérisée en ce que les rainures principales (8,9,10) sont de profondeur inférieure à celle de la rainure d'alimentation (7) correspondante.

8. Garniture selon les revendications 5 et 7, caractérisée en ce que les rainures principales (8,9,10) ont les unes par rapport aux autres une profondeur décroissante en s'éloignant de ladite circonférence de la bague.

9. Garniture selon les revendications 4 et 7, caractérisée en ce que les rainures principales (8,9,10) ont les unes par rapport aux autres une profondeur décroissante dans le sens opposé au sens de rotation de la bague.

## Patentansprüche

1. Trockenlaufende Dichtungsgarnitur mit aerodynamischem Luftkissen für die Abdichtung von gasförmigen Milieus, mit einem unbeweglichen primären Dichtungsring (1) und einem komplementären Dichtungsring (2), deren einander gegenüberliegende Seiten (3, 4) "Reibseiten" bilden und radial verlaufen, wobei einer der Ringe (1) dicht an einem Rahmen (5) befestigt ist, während der andere (2) auf einer Welle (6) befestigt ist, und wobei Speiserinnen (7) ausgehend vom äußeren Rand der Reibseite (4) eines der Ringe (2) nach innen verlaufen, dadurch gekennzeichnet, daß mindestens zwei benachbarte Hauptrinnen (8, 9), die unterschiedliche Tiefe besitzen, nebeneinander liegen, vom Rand einen Abstand sowie ein konvergentes Profil besitzen, an jede der Speiserinnen (7) angeschlossen sind und daß die Gesamtheit der Rinnen (7, 8, 9) sich bis zu einem Durchmesser des Rings (2) erstreckt, der eine Zone mit Rinnen gegen eine Zone ohne Rinnen abgrenzt.

2. Garnitur nach Anspruch 1, dadurch gekennzeichnet, daß die Speiserinnen (7) radial verlaufen.

3. Garnitur nach Anspruch 1, dadurch gekennzeichnet, daß die Speiserinnen (7) in Umfangsrichtung verlaufen.

4. Garnitur nach Anspruch 2 oder 3, dadurch gekennzeichnet, daß die Hauptrinnen (8, 9, 10) radial verlaufen.

5. Garnitur nach Anspruch 2 oder 3, dadurch gekennzeichnet, daß die Hauptrinnen (8, 9, 10) in Umfangsrichtung verlaufen.

6. Garnitur nach einem der vorhergehenden Ansprüche, dadurch gekennzeichnet, daß drei Hauptrinnen (8, 9, 10) für jede Speiserinne (7) vorgesehen sind.

7. Garnitur nach einem der vorhergehenden Ansprüche, dadurch gekennzeichnet, daß die Hauptrinnen (8, 9, 10) eine geringere Tiefe als die entsprechende Speiserinne (7) aufweisen.

8. Garnitur nach den Ansprüchen 5 und 7, dadurch gekennzeichnet, daß die Hauptrinnen (8, 9, 10) im Vergleich zueinander eine mit zunehmender Entfernung vom äußeren Rand des Rings abnehmende Tiefe besitzen.

9. Garnitur nach den Ansprüchen 4 und 7, dadurch gekennzeichnet, daß die Hauptrinnen (8, 9, 10) im Vergleich zueinander eine in entgegengesetzter Richtung zur Drehrichtung des Rings abnehmende Tiefe besitzen.

## Claims

1. A dry gasket assembly having aerodynamic lift for providing sealing between gaseous media, said gasket assembly including a fixed primary sealing ring (1) and a complementary sealing ring (2), the sealing rings having radially extending facing "rubbing" faces (3, 4), one of said rings (1) being designed to be secured in sealed manner to a frame (5), and the other ring (2) being designed to be secured to a shaft (6), and "feed" groves (7) extending inwardly from one of the circumferences of the rubbing face (4) of one of said rings (2), said gasket assembly being characterized in that at least two main grooves (8, 9) of different depth, mutually adjoining, distant from said circumference, and of tapering profile are connected to each of said feed grooves (7), the resulting set of grooves (7, 8, 9) extending to a diameter of the ring (2) separating a grooved zone and a groove-free zone.

2. A gasket assembly according to claim 1, characterized in that the feed grooves (7) are radial.

3. A gasket assembly according to claim 1, characterized in that the feed grooves (7) are circumferential.

4. A gasket assembly according to claim 2 or 3, characterized in that the main grooves (8, 9, 10) are radial.

5. A gasket assembly according to claim 2 or 3, characterized in that the main grooves (8, 9, 10) are circumferential.

6. A gasket assembly according to any preceding claim, characterized in that there are three main grooves (8, 9, 10) for each feed groove (7).

7. A gasket assembly according to any preceding claim, characterized in that the main grooves (8, 9, 10) are shallower than the corresponding feed groove (7).

8. A gasket assembly according to claims 5 and 7, characterized in that the main grooves (8, 9, 10) are of decreasing depth relative to one another going away from said circumference of the ring.

9. A gasket assembly according to claims 4 and 7, characterized in that the main grooves (8, 9, 10) are of decreasing depth relative to one another going in the opposite direction to the rotation direction of the ring.
